# EUROPÄISCHE PATENTSCHRIFT

(11) **EP 0 566 029 B1**
(45) Veröffentlichungstag und Bekanntmachung des Hinweises auf die Patenterteilung: **22.01.1997**
(21) Anmeldenummer: 93105825.9
(22) Anmeldetag: 08.04.1993
(51) Int. Cl.: F16K 25/00

(54) **Ventilscheiben aus siliciuminfiltriertem Siliciumcarbid**
Valve disc made of silicon/carbide infiltrated with silicon
Disque pour robinet en carbure de silicium infiltré de silicium

(30) Priorität: 17.04.1992 DE 4212874
(43) Veröffentlichungstag der Anmeldung: 20.10.1993
(73) Patentinhaber: CeramTec AG Innovative Ceramic Engineering, 73207 Plochingen (DE)
(72) Erfinder: Russner, Klaus, W-8560 Lauf (DE)

(56) Entgegenhaltungen:
- EP-A- 0 043 456
- WO-A-92/16778
- DE-A- 3 116 786
- DE-A- 3 116 801
- FR-A- 2 445 305
- US-A- 4 856 758

## Beschreibung

Ventilscheiben für Steuer- und Regelzwecke, insbesondere für Wasserarmaturen im Sanitärbereich, werden in bekannter Weise seit längerem aus keramischen Werkstoffen wie zum Beispiel Aluminiumoxid, Zirkonoxid und auch aus Siliciumcarbid hergestellt. In der deutschen Patentanmeldung 31 16 801 werden Ventilscheiben beschrieben, welche vollständig aus Siliciumcarbidwerkstoff bestehen, der maximal 0,1 % Volumenanteil Porengehalt aufweist, aus 70 - 92 Gew.-% Siliciumcarbid besteht und 8 - 30 Gew.-% metallisches Silicium enthält. Das Herstellverfahren für derartige Werkstoffe ist in der deutschen Patentanmeldung 31 16 786 veröffentlicht.

In der italienischen Patentanmeldung Nr. 67 746 A/82 wird die Verwendung von Siliciumcarbidwerkstoffen unterschiedlicher Härte für die Ventilscheibenpaarung beschrieben und festgestellt, daß die Scheibe mit der höheren Härte die geringere Oberflächenrauhigkeit und die Scheibe mit der niedrigeren Härte die größere Oberflächenrauhigkeit aufweisen soll, ohne daß dem Fachmann im einzelnen in quantifizierbarer Weise offenbart wird, welche zahlenmäßigen Rauhigkeitswerte für die verschiedenen Oberflächenprofilkennwerte wie Mittenrauhwert Rₐ, maximale Rauhtiefe Rₜ, gemittelte Rauhtiefe R_{z} anzustreben hat. In dem US-Patent 48 56 758 wird der Unterschied in der Härte der beiden Ventilscheiben näher spezifiziert und festgelegt, daß er mindestens 1.000 N/mm² maximal 7.000 N/mm² betragen soll.

Es ist bekannt, daß die Härtemessung von Matrixwerkstoffen sehr schwierig ist und zuverlässig reproduzierbare Meßwerte die sichere Beherrschung der Mikrohärtemessung voraussetzen, wozu in jedem Falle ein sehr großer laboratorieller Aufwand vonnöten ist. Für den Herstellungsprozeß ist es außerdem sehr schwierig und aufwendig, zwei in ihrem Gefüge, das heißt in ihrer Härte, verschiedene Werkstoffe nebeneinander zu produzieren, insbesondere auch deswegen, weil der Härteunterschied in den relativ engen Grenzen zwischen 1.000 und 7.000 N/mm² bleiben muß.

In der bereits genannten italienischen Patentanmeldung wird die Oberflächengüte der Ventilscheiben allgemein in dem Bereich 0,2 bis 0,4 µm genannt, ohne daß dazu ausgesagt wird, um welchen Profilkennwert Rₐ, Rₜ oder R_{z} es sich handelt. In der deutschen Patentanmeldung 31 16 801 wird ein Rₐ-Wert im Bereich 0,1 bis 0,15 µm genannt.

Die funktionelle Hauptaufgabe der Ventilscheiben ist, im Langzeitgebrauch die Dichtigkeit der Steuer- und Regelventile, wie zum Beispiel Wasserarmaturen, zu gewährleisten. Neben dem Erhalt ihrer Dichtwirkung dürfen sich aber auch die für ihre Betätigung aufzuwendenden Kräfte oder Drehmomente nicht wesentlich erhöhen. Die Gefahr dazu entsteht durch korrosive Wirkungen der im Ventil strömenden Medien, durch aus ihnen entstehende Ablagerungen oder durch von ihnen mitgeführte Verunreinigungen, welche in ihrer Härte der Härte des Ventilscheibenwerkstoffes gleichkommen können. Zur Erfüllung dieser technischen Anforderungen werden gemäß dem Stand der Technik für Ventilscheiben besonders korrosionsfeste, chemisch beständige und harte Werkstoffe, vorzugsweise keramische Hartstoffe, in der Paarung aus gleichem Werkstoff oder in geeigneter Werkstoffkombination eingesetzt. Der Fachmann weiß, daß bei gegebener Anpreßkraft der Scheiben die Größe der zur Betätigung erforderlichen Kraft (Drehmoment) ganz entscheidend von der Güte der Oberfläche abhängt und daß sich insbesondere im Sinne der obengenannten Langzeitkonstanz der Betätigungskraft die Oberflächengüte nicht verschlechtern darf. Er beurteilt den Gütezustand der Ventilscheibenoberfläche durch die technisch geläufigen Kenngrößen Rauhtiefe Rₜ, Mittenrauhwert Rₐ sowie den Flächentraganteil tₚᵢ. Gemäß dem Stand der Technik, wie oben dargelegt, verlangt der Fachmann niedrige Zahlenwerte für Rₐ von 0,1 - 0,15 µm bis 0,2 - 0,4 µm.

In eingehenden Untersuchungen wurde festgestellt, daß trotz der Einhaltung der quantitativ vorgegebenen Zahlenwerte für Rₐ, Rₜ und tₚᵢ gleichhohe Betätigungskräfte bei einer Serie von Scheibenpaaren nicht exakt eingehalten werden können. Im praktischen Fall ergibt sich somit eine deutliche Streuung der Betätigungskräfte der einzelnen Scheibenpaare.

Die Analyse des Problems zeigte, daß trotz Einhaltung der vorgegebenen quantitativen Werte von Rₐ, Rₜ und tₚᵢ die Mikroprofile der Ventilscheibenoberfläche erheblich voneinander abweichen. Das heißt mit anderen Worten, daß durch die alleinige Bezifferung der Kennwerte Rₐ, Rₜ und tₚᵢ die Erfüllung der funktionellen Anforderung noch nicht gewährleistet werden kann.

Es ist daher die Aufgabe der vorliegenden Erfindung, zusätzlich zu den bisher vom Fachmann benutzten Profilkennwerten Rₜ, Rₐ und tₚᵢ die eigentlich funktionstechnisch bestimmenden Merkmale der Ventilscheibenflächen, das heißt die Gesamtheit ihrer mikrotopographischen Kennwerte, optimal einzustellen. Daneben darf, auch aus Gründen der Wirtschaftlichkeit, bei der Herstellung für die Ventilscheiben nur ein Werkstoff verwendet werden.

Die gestellte Aufgabe wurde gelöst durch eine Ventilscheibe aus siliciuminfiltriertem Siliciumcarbid für Steuerelemente zur Regelung von Flüssigkeitsströmen, insbesondere für sanitäre Mischventile, wobei das Siliciumcarbidmaterial aus 70 bis 92 Gew.-% Siliciumcarbid und 8 bis 30 Gew.-% Silicium mit einem Gehalt an freiem Kohlenstoff von maximal 0,2 Gew.-% besteht und einen Volumenanteil an geschlossenen Poren von maximal 0,1 % enthält und die Ventilscheibe folgende mikrotopographischen Eigenschaftswerte aufweist:

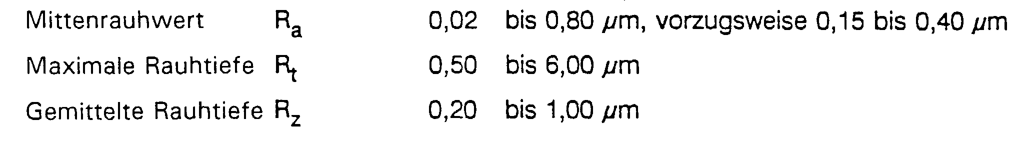

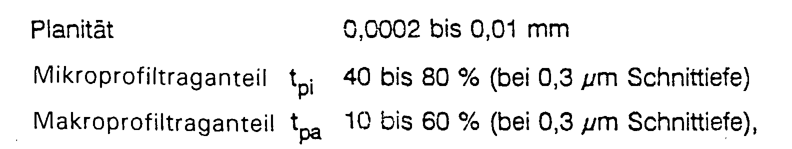

Bei den bisher üblichen Ventilscheiben zeigt die Funktionsfläche ein Erscheinungsbild, wonach die tragende Fläche gelegentlich von vereinzelten Vertiefungen unterbrochen ist. Bei den Ventilscheiben gemäß der vorliegenden Erfindung verhält es sich dagegen gerade umgekehrt, d. h. hier erkennt man im Rasterelektronenmikroskop, daß die tragende Oberfläche nun in Form von isolierten Inseln ausgebildet ist, während der weitaus größere Teil der Oberfläche als Vertiefung vorliegt. Trotz dieser besonderen Strukturen der Oberfläche ist aber die Dichtheit einer mit erfindungsgemäßen Ventilscheiben ausgerüsteten Ventilarmatur gewährleistet.

Das für die Herstellung der erfindungsgemäßen Ventilscheiben dienende siliciuminfiltrierte Siliciumcarbid kann gemäß den Angaben der deutschen Patentanmeldung 31 16 786 hergestellt werden. Vorzugsweise verwendet man ein solches Material, das in seiner Struktur ein SiC-Kristallgefüge mit Kristallitgrößen im Bereich zwischen 1 und 30 µm besitzt, einen Gehalt an freiem metallischen Silicium von mindestens 8 Gew.-% hat, einen E-Modul im Bereich von 300.000 bis 400.000 N/mm² aufweist und dessen Härte in der SiC-Matrix zwischen 20.000 und 30.000 N/mm² liegt, wobei das metallische Silicium eine Härte zwischen 10.000 bis 15.000 N/mm² besitzt. Ein Material dieser Art kann man analog zu den Angaben in DE 31 16 786 erhalten, wenn man im Vergleich zu dem dort genannten Ausgangspulver hier ein Ausgangspulver nimmt, das feinkörniger ist und einen höheren E-Modul aufweist. Daneben kommt für die Herstellung der erfindungsgemäßen Ventilscheiben auch CSiSiC-Material in Frage, das gegenüber dem zuvor beschriebenen SiSiC zusätzlich noch freien Kohlenstoff eingelagert enthält.

Die Herstellung der erfindungsgemäßen Ventilscheiben erfolgt nach üblichen Verfahren wie in DE 31 16 786 beschrieben. Nach der Silicierung werden die rohen Ventilscheiben in üblicher Weise geschliffen und anschließend in zwei Stufen mit wäßrigen Suspensionen von Diamantkörnern poliert. In der ersten Stufe wird mit einer Suspension von Diamantkörnern poliert, die einen mittleren Korndurchmesser von ca. 3 bis 6 µm haben. In der zweiten Stufe wird mit solchen Diamantkörnern poliert, die eine mittlere Korngröße von ca. 10 bis 20 µm haben. Es ist überraschend, daß man durch diese Art des Polierens, wo erst mit einem feineren Korn und dann mit einem gröberen Korn gearbeitet wird, Ventilscheiben erhält, die die oben dargelegten mikrotopographischen Eigenschaftswerte aufweisen. Diese Ventilscheiben weisen gegenüber den Ventilscheiben gemäß DE 31 16 801, die nicht auf diese Weise poliert werden, geringere Betätigungsmomente auf.

## Patentansprüche

1. Ventilscheibe aus siliciuminfiltriertem Siliciumcarbidmaterial für Steuerelemente zur Regelung von Flüssigkeitsströmen insbesondere für sanitäre Mischventile, wobei das Siliciumcarbidmaterial aus 70 bis 92 Gew.-% Siliciumcarbid und 8 bis 30 Gew.-% Silicium mit einem Gehalt an freiem Kohlenstoff von maximal 0,2 Gew.-% besteht und einen Volumenanteil an geschlossenen Poren von maximal 0,1 % enthält, dadurch gekennzeichnet, daß die Ventilscheibe eine Funktionsfläche besitzt, bei der isolierte Inseln tragender Flächen von einem relativ zu den isolierten Inseln tieferliegenden Niveau, das den weitaus größeren Teil der Funktionsfläche ausmacht, umgeben sind, wobei die Funktionsfläche über ihren ganzen Bereich folgende mikrotopographischen Eigenschaftswerte aufweist:
| | |
|---|---|
| Mittenrauhwert Rₐ | 0,02 bis 0,80 µm, vorzugsweise 0,15 bis 0,40 µm, |
| Maximale Rauhtiefe Rₜ | 0,50 bis 6,00 µm, |
| Gemittelte Rauhtiefe R_{z} | 0,20 bis 1,00 µm, |
| Planität Planität | 0,0002 bis 0,01 mm, |
| Mikroprofiltraganteil tₚᵢ | 40 bis 80 % (bei 0,3 µm Schnittiefe), |
| Makroprofiltraganteil tₚₐ | 10 bis 60 % (bei 0,3 µm Schnittiefe). |

2. Ventilscheibe nach Anspruch 1, dadurch gekennzeichnet, daß sie aus siliciuminfiltriertem Siliciumcarbid besteht, das in seiner Struktur ein SiC-Kristallgefüge mit Kristallitgrößen im Bereich zwischen 1 und 30 µm besitzt.

3. Ventilscheibe nach Anspruch 1 oder 2, dadurch gekennzeichnet, daß sie aus siliciuminfiltriertem Siliciumcarbid besteht, das einen Gehalt an freiem metallischen Silicium von mindestens 8 Gew.-% hat.

4. Ventilscheibe nach einem der Ansprüche 1 bis 3, dadurch gekennzeichnet, daß sie aus siliciuminfiltriertem Siliciumcarbid besteht, das einen E-Modul im Bereich von 300.000 bis 400.000 N/mm² aufweist.

5. Ventilscheibe nach einem der Ansprüche 1 bis 4, dadurch gekennzeichnet, daß sie aus siliciuminfiltriertem Siliciumcarbid besteht, dessen Härte in der SiC-Matrix zwischen 20.000 und 30.000 N/mm² liegt, wobei die Härte des metallischen Siliciums zwischen 10.000 bis 15.000 N/mm² beträgt.

6. Ventilscheibe nach Anspruch 1, dadurch gekennzeichnet, daß sie aus CSiSiC besteht.

7. Verfahren zum Herstellen einer Ventilscheibe nach einem der Ansprüche 1 bis 6, bei dem Siliziumcarbid gemahlen, getrocknet, mit Kohlenstoff und Formgebungshilfsmitteln vermischt, zu Ventilscheiben geformt, anschließend verkokt und bei Temperaturen im Bereich von 1100 bis 1300 °C unter Inertgasatmosphäre siliziert wird, wobei die silizierte Ventilscheibe geschliffen und anschließend poliert wird, dadurch gekennzeichnet, daß das Polieren in zwei Stufen mit wäßrigen Suspensionen von Diamantkörnern erfolgt, wobei in der ersten Stufe mit einer Suspension von Diamantkörnern poliert wird, die einen mittleren Korndurchmesser von 3 bis 6 µm haben, und in der zweiten Stufe mit solchen Diamantkörnern poliert wird, die eine mittlere Korngröße von 10 bis 20 µm haben, wobei eine Funktionsfläche erhalten wird, die einen Makroprofiltraganteil tₚₐ von 10 bis 60 % bei 0,3 µm Schnittiefe aufweist.

## Claims

1. A valve disk of silicon-infiltrated silicon carbide material for control elements for regulating liquid flows, in particular for service-water mixer valves, the silicon carbide material comprising 70 to 92% by weight of silicon carbide and 8 to 30% by weight of silicon with a content of at most 0.2% by weight of free carbon and containing at most 0.1% by volume of closed pores, wherein the valve disk has a functional surface in which isolated islands of bearing surfaces are surrounded by a level lying lower with respect to the isolated islands, this level accounting for by far the greater proportion of the functional surface, the functional surface having the following microtopographical characteristics over its entire region:

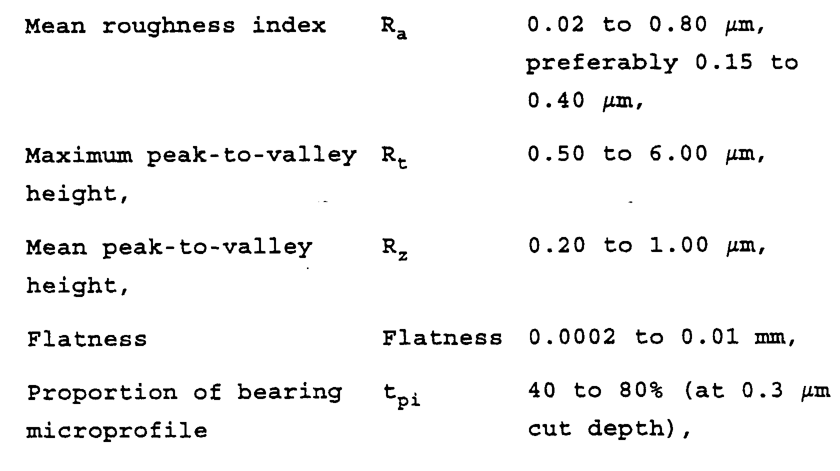

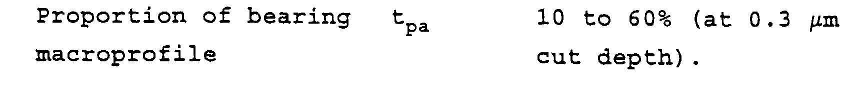

2. The valve disk as claimed in claim 1, which comprises silicon-infiltrated silicon carbide having in its structure an SiC crystal structure with crystallite sizes in the range between 1 and 30 µm.

3. The valve disk as claimed in claim 1 or 2, which comprises silicon-infiltrated silicon carbide containing at least 8% by weight of free metallic silicon.

4. The valve disk as claimed in any of claims 1 to 3, which comprises silicon-infiltrated silicon carbide having a modulus of elasticity in the range of 300,000 to 400,000 N/mm².

5. The valve disk as claimed in any of claims 1 to 4, which comprises silicon-infiltrated silicon carbide with a hardness in the SiC matrix of between 20,000 and 30,000 N/mm², the hardness of the metallic silicon being between 10,000 and 15,000 N/mm².

6. The valve disk as claimed in claim 1, which comprises CSiSiC.

7. A process for manufacturing a valve disk as claimed in any of claims 1 to 6, in which silicon carbide is ground, dried, mixed with carbon and molding auxiliaries, shaped to form valve disks, subsequently carbonized and siliconized at temperatures in the range of 1100 to 1300°C in an inert gas atmosphere, the siliconized valve disk being ground and subsequently polished, wherein the polishing takes place in two stages using aqueous suspensions of diamond grains, in the first stage polishing being carried out using a suspension of diamond grains having an average grain diameter of 3 to 6 µm, and in the second stage polishing being carried out with diamond grains having an average grain size of 10 to 20 µm, a functional surface being obtained which has a proportion of bearing macroprofile tₚₐ of from 10 to 60% at 0.3 µm cut depth.

## Revendications

1. Disque de robinet, en un matériau à base de carbure de silicium comportant des infiltrations de silicium, pour éléments de commande destinés à la régulation de courants liquides, en particulier pour mélangeurs sanitaires, où le matériau à base de carbure de silicium est constitué de 70 à 92 % en poids de carbure de silicium et de 8 à 30 % en poids de silicium, avec une teneur maximale en carbone libre de 0,2 %, et contient une fraction volumique maximale de pores fermés de 0,1 % caractérisé en ce que le disque de robinet possède une surface fonctionnelle dans laquelle des îlots isolés de surfaces portantes sont entourés d'un niveau relativement plus profond par rapport aux îlots isolés, niveau qui représente la très grande partie de la surface fonctionnelle, la surface fonctionnelle présentant, dans tous son domaine, les propriétés microtopographiques suivantes :
| | | |
|---|---|---|
| Rugosité moyenne | Rₐ | 0,02 à 0,80 µm, de préférence 0,15 à 0,40 µm |
| Profondeur maximale de rugosité | Rₜ | 0,50 à 6,00 µm |
| Profondeur moyenne de rugosité | R_{z} | 0,20 à 1,00 µm |
| Planéité | Planéité | 0,0002 à 0,01 mm |
| Fraction portante du microprofil | tₚᵢ | 40 à 80 % (pour une profondeur de passe de 0,3 µm) |
| Fraction portante du macroprofil | tₚₐ | 10 à 60 % (pour une profondeur de passe de 0,3 µm) |

2. Disque de robinet selon la revendication 1, caractérisé en ce qu'il est constitué d'un carbure de silicium comportant des infiltrations de silicium, qui présente dans sa structure une texture cristalline de SiC ayant des cristallites dont la taille est comprise entre 1 et 30 µm.

3. Disque de robinet selon la revendication 1 ou 2, caractérisé en ce qu'il est constitué d'un carbure de silicium comportant des infiltrations de silicium, qui présentent une teneur en silicium métallique libre d'au moins 8 % en poids.

4. Disque de robinet selon l'une des revendications 1 à 3, caractérisé en ce qu'il est constitué d'un carbure de silicium comportant des infiltrations de silicium, dont le module d'élasticité est compris dans l'intervalle de 300 000 à 400 000 N/mm².

5. Disque de robinet selon l'une des revendications 1 à 4, caractérisé en ce qu'il est constitué d'un carbure de silicium comportant des infiltrations de silicium, dont la dureté, dans la matrice de SiC, est comprise entre 20 000 et 30 000 N/mm², la dureté du silicium métallique étant comprise entre 10 000 et 15 000 N/mm².

6. Disque de robinet selon la revendication 1, caractérisé en ce qu'il est constitué de CSiSiC.

7. Procédé de fabrication d'un disque de robinet selon l'une des revendications 1 à 6, dans lequel du carbure de silicium est broyé, séché, mélangé à du carbone et à des auxiliaires de façonnage, façonné pour donner des disques de robinets, puis cokéfié, et silicié sous atmosphère d'un gaz inerte à des températures comprises dans l'intervalle de 1100 à 1300°C, le disque de robinet silicié étant soumis à un travail par abrasion, et ensuite poli, caractérisé en ce que le polissage est effectué en deux étapes avec des suspensions aqueuses de grains de diamant, où on procède dans la première étape à un polissage avec une suspension de grains de diamant ayant une granulométrie moyenne de 3 à 6 µm, et on procède dans la deuxième étape à un polissage avec des grains de diamant ayant une granulométrie moyenne de 10 à 20 µm, ce qui permet d'obtenir une surface fonctionnelle présentant une fraction portante de macroprofil tₚₐ de 10 à 60 % pour une profondeur de passe de 0,3 µm.
